# EUROPEAN PATENT APPLICATION

(11) **EP 4 443 558 A1**
(43) Date of publication of application: **09.10.2024**
(21) Application number: 22941323.2
(22) Date of filing: 23.06.2022
(51) Int. Cl.: H01M 4/485

(54) **MULTI-ELEMENT CO-DOPED SODIUM-ION POSITIVE ELECTRODE MATERIAL, AND PREPARATION METHOD THEREFOR AND USE THEREOF**

(30) Priority: 13.05.2022 CN 202210524985
(71) Applicant: Shanghai Energy New Materials Technology Co., Ltd., Shanghai 201399 (CN)
(72) Inventor: ZHUANG, Zhi, Shanghai 201399 (CN); DENG, Cheng, Shanghai 201399 (CN); WU, Huikang, Shanghai 201399 (CN); YUAN, Yuan, Shanghai 201399 (CN); ZHENG, Tianrui, Shanghai 201399 (CN); LU, Peng, Shanghai 201399 (CN); CUI, Ruyu, Shanghai 201399 (CN); CHENG, Yue, Shanghai 201399 (CN)
(74) Representative: Ipside
(86) International application number: PCT/CN2022/100733
(87) International publication number: WO 2023/216377

(57) **Abstract**

Provided in the present invention is a multi-element co-doped sodium-ion positive electrode material, which is characterized in that the phase of the positive electrode material is an O3 phase, the space group thereof is R-3m, and the chemical formula thereof is Na_{α}MₐLi_{b}Cu_{c}Ti_{d}O_{2+β}, wherein M is at least one of Ni, Co, Mn, Cr, V, Al, Fe, B, Si, Mg and Zn, 0.5≤α≤1, -0.1≤β≤0.1, 0<a<0.95, 0<b<0.25, 0<c<0.3, 0<d<0.6, a+b+c+d=1, and the charge neutrality condition is met. Also provided in the present invention is a preparation method for and the use of the multi-element co-doped sodium-ion positive electrode material.

## Description

### Technical Field

The present invention relates to the technical field of materials, and particularly, to a multi-element co-doped sodium-ion positive electrode material, a method for preparing same, and use thereof.

### Background of the Invention

In recent years, lithium-ion batteries experienced an explosively increasing demand in 3C, energy storage, and power fields. However, lithium-ion batteries face the shortage of lithium, nickel, and cobalt resources, etc. Particularly, the price of lithium ore is continuously rising, and the increasing need for lithium-ion batteries can hardly be satisfied even if all discovered lithium resources over the world are exploited. In addition, due to the extremely uneven global distribution of lithium resources, 80% of lithium ores in China are imported from South America, posing serious risks to national energy safety. Therefore, other alkali metal element batteries with higher resource abundance, broad distribution, cost-efficiency, and good electrochemical performance are explored. In addition to such advantages, the sodium-ion battery is perfectly compatible with the lithium-ion battery, since most auxiliary materials and processes are identical or similar.

The sodium-ion battery mainly comprises a positive electrode, a negative electrode, a separator, an electrolyte, and other auxiliary materials. The performance of the positive electrode determines the performance of the battery. Common sodium-ion positive electrode material generally features disadvantages of low specific capacity (less than 135 mAh/g), poor structural stability and stability in air, and the like. The main approaches to achieve higher capacity are: expanding the voltage interval, introducing active lattice oxygen, and doping with electrochemical active elements (preferably, increasing Ni content). The former two will compromise the cycle life of the material, and the structural stability and high capacity are usually incompatible, resulting in a reduction of the average discharge voltage; the latter one greatly increases the cost of raw materials, and is contrary to the cost-efficiency of using sodium-ion positive electrode materials. The most common solution is to optimize the structure by doping. However, the effect of doping a single element is often limited, and can hardly bring improvement in both structure and performance. That is, to achieve a longer cycle life, the structure can be stabilized by doping, but doping a single element cannot simultaneously ensure high capacity and long cycle life.

Common sodium-ion positive electrode materials mainly include oxides, Prussian blue, and polyanions. Oxides possess the advantages of high specific capacity, cost-efficiency, high voltage, various raw material sources, environmental friendliness and the like, and gradually become a technical hotspot in the art. However, oxide positive electrode materials still face challenges from poor structural stability, rapid capacity loss, and poor stability in air due to phase transition, resulting in slow progress in commercialization.

### Summary of the Invention

The present invention is intended to achieve the synergistic effect of multiple elements via a multi-element co-doping mode, so as to improve the structure and the electrochemical performance of positive electrode materials.

Therefore, the present invention provides a multi-element co-doped sodium-ion positive electrode material, wherein the positive electrode material features the O3 phase, the R-3m space group, and a chemical formula of Na_{α}MₐLi_{b}Cu_{c}Ti_{d}O_{2+β}; M is at least one of Ni, Co, Mn, Cr, V, Al, Fe, B, Si, Mg, and Zn; 0.5 ≤ α ≤ 1, -0.1 ≤ β ≤ 0.1, 0 < a < 0.95, 0 < b < 0.25, 0 < c < 0.3, 0 < d < 0.6, and a + b + c + d = 1; the positive electrode material is electroneutral.

Preferably, M is one, two, or three of Ni, Mn, and Fe.

Preferably, 0.05 ≤ a + b + c < 1.

The present invention further provides a method for preparing the multi-element co-doped sodium-ion positive electrode material described above, comprising: weighing proper amounts of a compound containing Na element, a compound containing M element, a compound containing Li element, a compound containing Cu element, and a compound containing Ti element according to the atom ratio of elements Na, M, Li, Cu, and Ti in the chemical formula Na_{α}MₐLi_{b}Cu_{c}Ti_{d}O_{2+β}, and mixing to give a mixture; and calcining the mixture to give the multi-element co-doped sodium-ion positive electrode material.

Preferably, the compound containing M element, the compound containing Li element, the compound containing Cu element, and the compound containing Ti element are each independently at least one of a metal oxide, a metal nitrate, a metal sulfate, a metal carbonate, and a metal chloride.

Preferably, the compound containing Na element is at least one of sodium carbonate, sodium hydroxide, and sodium bicarbonate.

Preferably, the weighing amount of the compound containing Na element is 100% to 110% of a theoretical amount calculated according to the atom ratio of Na element, M element, Li element, Cu element, and Ti element.

Preferably, the weighing amount of the compound containing Na element is 102% to 106% of a theoretical amount.

Preferably, the weighing amount of the compound containing Li element is 100% to 110% of a theoretical amount.

Preferably, the weighing amount of the compound containing Li element is 102% to 106% of a theoretical amount.

Preferably, the mixing comprises: mixing the compound containing Na element, the compound containing M element, the compound containing Li element, the compound containing Cu element, and the compound containing Ti element, and grinding in a ball mill to give the mixture.

Preferably, the speed of the ball mill is 100 to 1000 rpm, and the time is 1 to 48 hours.

Preferably, for the calcination, the temperature is 700 to 1050 °C, the time is 6 to 36 hours, and the ramping rate is 1 to 20 °C/min.

The present invention further provides a method for preparing the multi-element co-doped sodium-ion positive electrode material described above, comprising: weighing a proper amount of a nitrate containing M element or a sulfate containing M element according to the atom ratio of M element in chemical formula MCOs or M(OH)₂, dissolving in water, uniformly precipitating by adjusting pH with a precipitant and a complexing agent, and drying to give a precursor MCOs or M(OH)₂; weighing proper amounts of a compound containing Na element, a compound containing Li element, a compound containing Cu element, a compound containing Ti element, and the precursor MCOs or M(OH)₂ according to the atom ratio of elements Na, M, Li, Cu, and Ti in the chemical formula Na_{α}MₐLi_{b}Cu_{c}Ti_{d}O_{2+β}, and mixing to give a mixture; and calcining the mixture to give the multi-element co-doped sodium-ion positive electrode material.

Preferably, the compound containing Li element, the compound containing Cu element, and the compound containing Ti element are each independently at least one of a metal oxide, a metal nitrate, a metal sulfate, a metal carbonate, and a metal chloride.

Preferably, the compound containing Na element is at least one of sodium carbonate, sodium hydroxide, and sodium bicarbonate.

Preferably, the weighing amount of the compound containing Na element is 100% to 110% of a theoretical amount calculated according to the atom ratio of Na element, M element, Li element, Cu element, and Ti element.

Preferably, the weighing amount of the compound containing Na element is 102% to 106% of a theoretical amount.

Preferably, the weighing amount of the compound containing Li element is 100% to 110% of a theoretical amount.

Preferably, the weighing amount of the compound containing Li element is 102% to 106% of a theoretical amount.

Preferably, the pH in the step acquiring the precursor is 7.5 to 13, the precipitant is sodium hydroxide or sodium carbonate, the complexing agent is ammonia water, the drying temperature is 80 to 150 °C, and/or the drying time is 6 to 48 hours.

Preferably, the mixing comprises: mixing the compound containing Na element, the compound containing Li element, the compound containing Cu element, the compound containing Ti element, and the precursor MCOs or M(OH)₂, and grinding in a ball mill to give the mixture.

Preferably, the speed of the ball mill is 100 to 1000 rpm, and the time is 1 to 48 hours.

Preferably, for the calcination, the temperature is 700 to 1050 °C, the time is 6 to 36 hours, and the ramping rate is 1 to 20 °C/min.

The present invention further provides a sodium-ion battery comprising the multi-element co-doped sodium-ion positive electrode material.

Preferably, the sodium-ion battery is used for low-speed bicycles, electric vehicles, wind power generation, smart grid peak shaving, solar power generation, household power supply, or large-scale energy storage devices of communication base stations.

According to the present invention, Li⁺ has larger ionic radius and stronger Li-O binding energy, such that lattice oxygen can be activated at a high voltage, thus achieving a reversible capacity via the O²/Oⁿ- pair; Ti⁴⁺ improves the property of Ni²⁺/Ti⁴⁺-O²⁻ covalent bond, thereby providing a structure with higher stability, reducing the mixed arrangement of cations, suppressing the multiphase transformation, and stabilizing the layered structure of the material. Cu²⁺ significantly enhances the stability in air of the material, and the Cu²⁺/Cu³⁺ pair may constitute a part of the capacity. Therefore, the positive electrode material disclosed herein is endowed with high structural stability and high electrochemical performance.

### Brief Description of the Drawings

FIG. 1 illustrates an SEM topograph of Example 1;
FIG. 2 illustrates an SEM topograph of Example 3;
FIG. 3 illustrates XRD patterns of Examples 3 and 4;
FIG. 4 illustrates first-turn electrochemical profiles of Examples 4 and 5; and
FIG. 5 illustrates cycling profiles of the first 100 cycles of Examples 1, 4, and 5.

### Detailed Description of Embodiments

The specific embodiments of the present invention are detailed with reference to the accompanying drawings. It will be appreciated that the specific embodiments described herein are intended to illustrate and explain the present invention only rather than limit the present invention.

The endpoints of the ranges and any values disclosed herein are not intended to limit to the precise range or value, and such ranges or values should be construed to encompass values approaching such ranges or values. For numerical ranges, one or more new numerical ranges can be given by combining endpoints of ranges, combining an endpoint of a range with an individual point value, and combining individual point values, and such numerical ranges should be construed as specifically disclosed herein.

A first embodiment of the present invention provides a multi-element co-doped sodium-ion positive electrode material, wherein the positive electrode material features the O3 phase, the R-3m space group, and a chemical formula of Na_{α}MₐLi_{b}Cu_{c}Ti_{d}O_{2+β}, and is electroneutral. In the formula, M is at least one of Ni, Co, Mn, Cr, V, Al, Fe, B, Si, Mg and Zn, and specifically, may be, but is not limited to, one, two, or three of Ni, Mn, and Fe; α is the number of Na atoms in 1 positive electrode material molecule, and 0.5 ≤ α ≤ 1; 2+β is the number of O atoms in 1 positive electrode material molecule, and -0.1 ≤ β ≤ 0.1; a is the number of M atoms in 1 positive electrode material molecule, and 0 < a < 0.95; b is the number of Li atoms in 1 positive electrode material molecule, and 0 < b < 0.25; c is the number of Cu atoms in 1 positive electrode material molecule, and 0 < c < 0.3; d is the number of Ti atoms in 1 positive electrode material molecule, and 0 < d < 0.6; a + b + c + d = 1. Furthermore, a + b + c may satisfy, but is not limited to, the following condition: 0.05 ≤ a + b + c < 1.

A second embodiment of the present invention provides a method for preparing a multi-element co-doped sodium-ion positive electrode material, which is described above and is not repeated herein. The method is a thermal solid phase method, and comprises the following steps:
Firstly, proper amounts of a compound containing Na element, a compound containing M element, a compound containing Li element, a compound containing Cu element, and a compound containing Ti element are weighed according to the atom ratio of elements Na, M, Li, Cu, and Ti in the chemical formula Na_{α}MₐLi_{b}Cu_{c}Ti_{d}O_{2+β}, and mixed to give a mixture. Specifically, the compound containing M element, the compound containing Li element, the compound containing Cu element, and the compound containing Ti element may each independently be, but are not limited to, at least one of a metal oxide, a metal nitrate, a metal sulfate, a metal carbonate, and a metal chloride. For example, the compound containing M element is at least one of an oxide containing M element, a nitrate containing M element, a sulfate containing M element, a carbonate containing M element, and a chloride containing M element; the compound containing Li element is at least one of an oxide containing Li element, a nitrate containing Li element, a sulfate containing Li element, a carbonate containing Li element, and a chloride containing Li element; the compound containing Cu element is at least one of an oxide containing Cu element, a nitrate containing Cu element, a sulfate containing Cu element, a carbonate containing Cu element, and a chloride containing Cu element; the compound containing Ti element is at least one of an oxide containing Ti element, a nitrate containing Ti element, a sulfate containing Ti element, a carbonate containing Ti element, and a chloride containing Ti element. Specifically, the compound containing Na element may be, but is not limited to, at least one of sodium carbonate, sodium hydroxide, and sodium bicarbonate. During the mixing, the compound containing Na element, the compound containing M element, the compound containing Li element, the compound containing Cu element, and the compound containing Ti element are mixed and ground in a ball mill to give the mixture, wherein the speed of the ball mill may be, but is not limited to, 100 to 1000 rpm, and the time may be, but is not limited to, 1 to 48 hours.

The weighing amounts of the compound containing Na element, the compound containing M element, the compound containing Li element, the compound containing Cu element, and the compound containing Ti element can be adjusted according to theoretical amounts calculated from the atom ratio of Na element, M element, Li element, Cu element, and Ti element, and the theoretical amounts can be determined by the following formulas:
theoretical amount of the compound containing Na element = (α) × (molecular weight of the compound containing Na element) × arbitrary constant/(number of Na atoms in 1 molecule of the compound containing Na element);
theoretical amount of the compound containing M element = (a) × (molecular weight of the compound containing M element) × arbitrary constant/(number of M atoms in 1 molecule of the compound containing M element);
theoretical amount of the compound containing Li element = (b) × (molecular weight of the compound containing Li element) × arbitrary constant/(number of Li atoms in 1 molecule of the compound containing Li element);
theoretical amount of the compound containing Cu element = (c) × (molecular weight of the compound containing Cu element) × arbitrary constant/(number of Cu atoms in 1 molecule of the compound containing Cu element);
theoretical amount of the compound containing Ti element = (d) × (molecular weight of the compound containing Ti element) × arbitrary constant/(number of Ti atoms in 1 molecule of the compound containing Ti element);
wherein the arbitrary constants in all formulas are identical.

The weighing amounts of the compound containing Na element, the compound containing M element, the compound containing Li element, the compound containing Cu element, and the compound containing Ti element may be, but are not limited to, 100% to 110%, preferably 102% to 106%, and more preferably 103% of the theoretical amounts. In one preferred embodiment, the weighing amounts of the compound containing M element, the compound containing Cu element, and the compound containing Ti element may be 100% of the theoretical amounts, and the weighing amounts of the compound containing Na element and the compound containing Li element may be 100% to 110%, preferably 102% to 106%, and more preferably 103% of the theoretical amounts.

Secondly, the mixture is calcined to give the multi-element co-doped sodium-ion positive electrode material. Specifically, for the calcination, the temperature may be, but is not limited to, 700 to 1050 °C, the time may be, but is not limited to, 6 to 36 hours, and the ramping rate may be, but is not limited to, 1 to 20 °C/min. In addition, in order to give a positive electrode material with a proper particle size, the positive electrode material may be further cooled, ground, and sieved through a 300-mesh sieve after the calcination.

A third embodiment of the present invention provides a method for preparing a multi-element co-doped sodium-ion positive electrode material, which is described above and is not repeated herein. The method is a coprecipitation method, and comprises the following steps:
Firstly, a proper amount of a nitrate containing M element or a sulfate containing M element is weighed according to the atom ratio of M element in chemical formula MCOs or M(OH)₂, dissolved in water, uniformly precipitated by adjusting pH with a precipitant and a complexing agent, and dried to give a precursor MCOs or M(OH)₂. Specifically, the pH adjusted with the precipitant and the complexing agent may be, but is not limited to, 7.5 to 13; examples of the precipitant may be, but are not limited to, sodium hydroxide or sodium carbonate; examples of the complexing agent may be, but are not limited to, ammonia water; the drying temperature may be, but is not limited to, 80 to 150 °C; the drying time may be, but is not limited to, 6 to 48 hours.

Secondly, proper amounts of a compound containing Na element, a compound containing Li element, a compound containing Cu element, a compound containing Ti element, and the precursor MCOs or M(OH)₂ are weighed according to the atom ratio of elements Na, M, Li, Cu, and Ti in the chemical formula Na_{α}MₐLi_{b}Cu_{c}Ti_{d}O_{2+β}, and mixed to give a mixture. Specifically, the compound containing Li element, the compound containing Cu element, and the compound containing Ti element may each independently be, but are not limited to, at least one of a metal oxide, a metal nitrate, a metal sulfate, a metal carbonate, and a metal chloride. For example, the compound containing Li element is at least one of an oxide containing Li element, a nitrate containing Li element, a sulfate containing Li element, a carbonate containing Li element, and a chloride containing Li element; the compound containing Cu element is at least one of an oxide containing Cu element, a nitrate containing Cu element, a sulfate containing Cu element, a carbonate containing Cu element, and a chloride containing Cu element; the compound containing Ti element is at least one of an oxide containing Ti element, a nitrate containing Ti element, a sulfate containing Ti element, a carbonate containing Ti element, and a chloride containing Ti element. Specifically, the compound containing Na element is at least one of sodium carbonate, sodium hydroxide, and sodium bicarbonate. During the mixing, the compound containing Na element, the compound containing Li element, the compound containing Cu element, the compound containing Ti element, and the precursor MCOs or M(OH)₂ are mixed and ground in a ball mill to give the mixture, wherein the speed of the ball mill may be, but is not limited to, 100 to 1000 rpm, and the time may be, but is not limited to, 1 to 48 hours.

The weighing amounts of the compound containing Na element, the compound containing Li element, the compound containing Cu element, the compound containing Ti element, and the precursor MCOs or M(OH)₂ can be adjusted according to theoretical amounts calculated from the atom ratio of Na element, M element, Li element, Cu element, and Ti element, and the theoretical amounts can be determined by the following formulas:
theoretical amount of the compound containing Na element = (α) × (molecular weight of the compound containing Na element) × arbitrary constant/(number of Na atoms in 1 molecule of the compound containing Na element);
theoretical amount of the compound containing Li element = (b) × (molecular weight of the compound containing Li element) × arbitrary constant/(number of Li atoms in 1 molecule of the compound containing Li element);
theoretical amount of the compound containing Cu element = (c) × (molecular weight of the compound containing Cu element) × arbitrary constant/(number of Cu atoms in 1 molecule of the compound containing Cu element);
theoretical amount of the compound containing Ti element = (d) × (molecular weight of the compound containing Ti element) × arbitrary constant/(number of Ti atoms in 1 molecule of the compound containing Ti element);
theoretical amount of the precursor MCOs or M(OH)₂ = (a) × (molecular weight of the precursor MCOs or M(OH)₂) × arbitrary constant;
wherein the arbitrary constants in all formulas are identical.

The weighing amounts of the compound containing Na element, the compound containing Li element, the compound containing Cu element, the compound containing Ti element, and the precursor MCOs or M(OH)₂ may be 100% to 110%, preferably 102% to 106%, and more preferably 103% of the theoretical amounts. In one preferred embodiment, the weighing amounts of the compound containing Cu element, the compound containing Ti element, and the precursor MCOs or M(OH)₂ may be 100% of the theoretical amounts, and the weighing amounts of the compound containing Na element and the compound containing Li element may be 100% to 110%, preferably 102% to 106%, and more preferably 103% of the theoretical amounts.

Secondly, the mixture is calcined to give the multi-element co-doped sodium-ion positive electrode material. Specifically, for the calcination, the temperature may be, but is not limited to, 700 to 1050 °C, the time may be, but is not limited to, 6 to 36 hours, and the ramping rate may be, but is not limited to, 1 to 20 °C/min. In addition, in order to give a positive electrode material with a proper particle size, the positive electrode material may be further cooled, ground, and sieved through a 300-mesh sieve after the calcination.

A fourth embodiment of the present invention provides a sodium-ion battery, comprising a multi-element co-doped sodium-ion positive electrode material, which is described above. Specifically, the multi-element co-doped sodium-ion positive electrode material can be mixed with a binder to form the positive electrode of the battery. Specifically, examples of the binder may be, but are not limited to, at least one of SP and PVDF. In addition, the mass ratio of the multi-element co-doped sodium-ion positive electrode material to the binder may be, but is not limited to, (70-95):(5-30), preferably 90:10. Furthermore, the sodium-ion battery may be used in, but are not limited to, low-speed bicycles, electric vehicles, wind power generation, smart grid peak shaving, solar power generation, household power supply, or large-scale energy storage devices of communication base stations.

The present invention is further illustrated by the following examples:

### Example 1

In this example, a positive electrode material, NaMn_{0.5}Ni_{0.25}Li_{0.05}Cu_{0.1}Ti_{0.1}O₂, was prepared as illustrated below:
Proper amounts of sodium carbonate, manganese(III) oxide, nickel(II) oxide, lithium carbonate, copper(II) oxide, and titanium dioxide were weighed according to the stoichiometric ratio of chemical formula NaMn_{0.5}Ni_{0.25}Li_{0.05}Cu_{0.1}Ti_{0.1}O₂, wherein the amounts of sodium carbonate and lithium carbonate were 103% of the theoretical amounts; the starting materials were ground in a ball mill for 6 hours at 350 rpm.

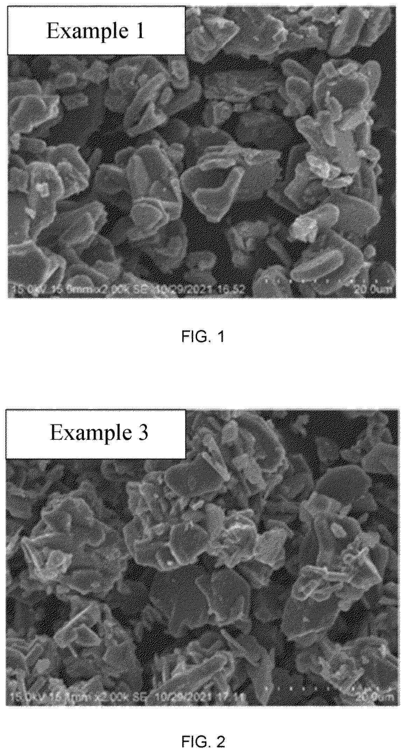

The ball-milled mixture was calcined in a furnace at 875 °C for 12 hours at a ramping rate of 5 °C/min, cooled, ground, and sieved through a 300-mesh sieve to give the positive electrode material (as shown in FIG. 1).

The prepared positive electrode material was mixed with SP and PVDF according to a mass ratio of 90:5:5, and the mixture was triturated, applied, dried, and cut to give a positive electrode. A button cell was assembled with the positive electrode and evaluated for its electrochemical performance.

### Example 2

In this example, a positive electrode material, NaMn_{0.5}Ni_{0.25}Li_{0.05}Cu_{0.15}Ti_{0.05}O₂, was prepared as illustrated below:
Proper amounts of sodium carbonate, manganese(III) oxide, nickel(II) oxide, lithium carbonate, copper(II) oxide, and titanium dioxide were weighed according to the stoichiometric ratio of chemical formula NaMn_{0.5}Ni_{0.25}Li_{0.05}Cu_{0.15}Ti_{0.05}O₂, wherein the amounts of sodium carbonate and lithium carbonate were 103% of the theoretical amounts; the starting materials were ground in a ball mill for 6 hours at 350 rpm.

The ball-milled mixture was calcined in a furnace at 875 °C for 12 hours at a ramping rate of 5 °C/min, cooled, ground, and sieved through a 300-mesh sieve to give the positive electrode material.

The prepared positive electrode material was mixed with SP and PVDF according to a mass ratio of 90:5:5, and the mixture was triturated, applied, dried, and cut to give a positive electrode. A button cell was assembled with the positive electrode and evaluated for its electrochemical performance.

### Example 3

In this example, a positive electrode material, NaMn_{0.5}Ni_{0.25}Li_{0.075}Cu_{0.1}Ti_{0.075}O₂, was prepared as illustrated below:
Proper amounts of sodium carbonate, manganese(III) oxide, nickel(II) oxide, lithium carbonate, copper(II) oxide, and titanium dioxide were weighed according to the stoichiometric ratio of chemical formula NaMn_{0.5}Ni_{0.25}Li_{0.075}Cu_{0.1}Ti_{0.075}O₂, wherein the amounts of sodium carbonate and lithium carbonate were 103% of the theoretical amounts; the starting materials were ground in a ball mill for 6 hours at 350 rpm.

The ball-milled mixture was calcined in a furnace at 875 °C for 12 hours at a ramping rate of 5 °C/min, cooled, ground, and sieved through a 300-mesh sieve to give the positive electrode material (as shown in FIG. 2).

The prepared positive electrode material was mixed with SP and PVDF according to a mass ratio of 90:5:5, and the mixture was triturated, applied, dried, and cut to give a positive electrode. A button cell was assembled with the positive electrode and evaluated for its electrochemical performance.

### Example 4

In this example, a positive electrode material, NaMn_{0.5}Ni_{0.25}Li_{0.075}Cu_{0.1}Ti_{0.075}O₂, was prepared as illustrated below:
Proper amounts of nickel(II) sulfate and manganese(II) sulfate were weighed according to the stoichiometric ratio of chemical formula Mn_{0.667}Ni_{0.333}(OH)₂, dissolved in a certain amount of water, uniformly precipitated by adjusting pH with sodium hydroxide and ammonia water, and dried at 100 °C to give a precursor Mn_{0.667}Ni_{0.333}(OH)₂.

Proper amounts of the precursor, sodium carbonate, lithium carbonate, copper(II) oxide, and titanium dioxide were weighed according to the stoichiometric ratio of chemical formula NaMn_{0.5}Ni_{0.25}Li_{0.075}Cu_{0.1}Ti_{0.075}O₂, and ground in a ball mill for 8 hours at 200 rpm.

The ball-milled mixture was calcined in a furnace at 850 °C for 15 hours at a ramping rate of 5 °C/min, cooled, ground, and sieved through a 300-mesh sieve to give the positive electrode material.

The prepared positive electrode material was mixed with SP and PVDF according to a mass ratio of 90:5:5, and the mixture was triturated, applied, dried, and cut to give a positive electrode. A button cell was assembled with the positive electrode and evaluated for its electrochemical performance.

### Example 5

In this example, a positive electrode material, NaMn_{0.4}Ni_{0.2}Fe_{0.15}Li_{0.075}Cu_{0.1}Ti_{0.075}O₂, was prepared as illustrated below:
Proper amounts of sodium carbonate, manganese(III) oxide, nickel(II) oxide, iron(III) oxide, lithium carbonate, copper(II) oxide, and titanium dioxide were weighed according to the stoichiometric ratio of chemical formula NaMn_{0.4}Ni_{0.2}Fe_{0.15}Li_{0.075}Cu_{0.1}Ti_{0.075}O₂, wherein the amounts of sodium carbonate and lithium carbonate were 103% of the theoretical amounts; the starting materials were ground in a ball mill for 6 hours at 350 rpm.

The ball-milled mixture was calcined in a furnace at 875 °C for 12 hours at a ramping rate of 5 °C/min, cooled, ground, and sieved through a 300-mesh sieve to give the positive electrode material.

The prepared positive electrode material was mixed with SP and PVDF according to a mass ratio of 90:5:5, and the mixture was triturated, applied, dried, and cut to give a positive electrode. A button cell was assembled with the positive electrode and evaluated for its electrochemical performance.

### Comparative Example 1

In this comparative example, a positive electrode material, NaMn_{0.5}Ni_{0.25}Li_{0.25}O₂, was prepared as illustrated below:
Proper amounts of sodium carbonate, manganese(III) oxide, nickel(II) oxide, and lithium carbonate, were weighed according to the stoichiometric ratio of chemical formula NaMn_{0.5}Ni_{0.25}Li_{0.25}O₂, wherein the amounts of sodium carbonate and lithium carbonate were 103% of the theoretical amounts; the starting materials were ground in a ball mill for 6 hours at 350 rpm.

The ball-milled mixture was calcined in a furnace at 875 °C for 12 hours at a ramping rate of 5 °C/min, cooled, ground, and sieved through a 300-mesh sieve to give the positive electrode material.

The prepared positive electrode material was mixed with SP and PVDF according to a mass ratio of 90:5:5, and the mixture was triturated, applied, dried, and cut to give a positive electrode. A button cell was assembled with the positive electrode and evaluated for its electrochemical performance.

### Comparative Example 2

In this comparative example, a positive electrode material, NaMn_{0.5}Ni_{0.25}Cu_{0.25}O₂, was prepared as illustrated below:
Proper amounts of sodium carbonate, manganese(III) oxide, nickel(II) oxide, and copper(II) oxide, were weighed according to the stoichiometric ratio of chemical formula NaMn_{0.5}Ni_{0.25}Cu_{0.25}O₂, wherein the amount of sodium carbonate was 103% of the theoretical amount; the starting materials were ground in a ball mill for 6 hours at 350 rpm.

The ball-milled mixture was calcined in a furnace at 875 °C for 12 hours at a ramping rate of 5 °C/min, cooled, ground, and sieved through a 300-mesh sieve to give the positive electrode material.

The prepared positive electrode material was mixed with SP and PVDF according to a mass ratio of 90:5:5, and the mixture was triturated, applied, dried, and cut to give a positive electrode. A button cell was assembled with the positive electrode and evaluated for its electrochemical performance.

### Comparative Example 3

In this comparative example, a positive electrode material, NaMn_{0.5}Ni_{0.25}Ti_{0.25}O₂, was prepared as illustrated below:
Proper amounts of sodium carbonate, manganese(III) oxide, nickel(II) oxide, and titanium dioxide, were weighed according to the stoichiometric ratio of chemical formula NaMn_{0.5}Ni_{0.25}Ti_{0.25}O₂, wherein the amount of sodium carbonate was 103% of the theoretical amount; the starting materials were ground in a ball mill for 6 hours at 350 rpm.

The ball-milled mixture was calcined in a furnace at 875 °C for 12 hours at a ramping rate of 5 °C/min, cooled, ground, and sieved through a 300-mesh sieve to give the positive electrode material.

The prepared positive electrode material was mixed with SP and PVDF according to a mass ratio of 90:5:5, and the mixture was triturated, applied, dried, and cut to give a positive electrode. A button cell was assembled with the positive electrode and evaluated for its electrochemical performance.

### Comparative Example 4

In this comparative example, a positive electrode material, NaMn_{0.5}Ni_{0.25}Li_{0.125}Cu_{0.125}O₂, was prepared as illustrated below:
Proper amounts of sodium carbonate, manganese(III) oxide, nickel(II) oxide, lithium carbonate, and copper(II) oxide were weighed according to the stoichiometric ratio of chemical formula NaMn_{0.5}Ni_{0.25}Li_{0.125}Cu_{0.125}O₂, wherein the amounts of sodium carbonate and lithium carbonate were 103% of the theoretical amounts; the starting materials were ground in a ball mill for 6 hours at 350 rpm.

The ball-milled mixture was calcined in a furnace at 875 °C for 12 hours at a ramping rate of 5 °C/min, cooled, ground, and sieved through a 300-mesh sieve to give the positive electrode material.

The prepared positive electrode material was mixed with SP and PVDF according to a mass ratio of 90:5:5, and the mixture was triturated, applied, dried, and cut to give a positive electrode. A button cell was assembled with the positive electrode and evaluated for its electrochemical performance.

### Comparative Example 5

In this comparative example, a positive electrode material, NaMn_{0.5}Ni_{0.25}Li_{0.125}Ti_{0.125}O₂, was prepared as illustrated below:
Proper amounts of sodium carbonate, manganese(III) oxide, nickel(II) oxide, lithium carbonate, and titanium dioxide were weighed according to the stoichiometric ratio of chemical formula NaMn_{0.5}Ni_{0.25}Li_{0.125}Ti_{0.125}O₂, wherein the amounts of sodium carbonate and lithium carbonate were 103% of the theoretical amounts; the starting materials were ground in a ball mill for 6 hours at 350 rpm.

The ball-milled mixture was calcined in a furnace at 875 °C for 12 hours at a ramping rate of 5 °C/min, cooled, ground, and sieved through a 300-mesh sieve to give the positive electrode material.

The prepared positive electrode material was mixed with SP and PVDF according to a mass ratio of 90:5:5, and the mixture was triturated, applied, dried, and cut to give a positive electrode. A button cell was assembled with the positive electrode and evaluated for its electrochemical performance.

### Comparative Example 6

In this comparative example, a positive electrode material, NaMn_{0.5}Ni_{0.25}Cu_{0.125}Ti_{0.125}O₂, was prepared as illustrated below:
Proper amounts of sodium carbonate, manganese(III) oxide, nickel(II) oxide, copper(II) oxide, and titanium dioxide were weighed according to the stoichiometric ratio of chemical formula NaMn_{0.5}Ni_{0.25}Cu_{0.125}Ti_{0.125}O₂, wherein the amount of sodium carbonate was 103% of the theoretical amount; the starting materials were ground in a ball mill for 6 hours at 350 rpm.

The ball-milled mixture was calcined in a furnace at 875 °C for 12 hours at a ramping rate of 5 °C/min, cooled, ground, and sieved through a 300-mesh sieve to give the positive electrode material.

The prepared positive electrode material was mixed with SP and PVDF according to a mass ratio of 90:5:5, and the mixture was triturated, applied, dried, and cut to give a positive electrode. A button cell was assembled with the positive electrode and evaluated for its electrochemical performance.

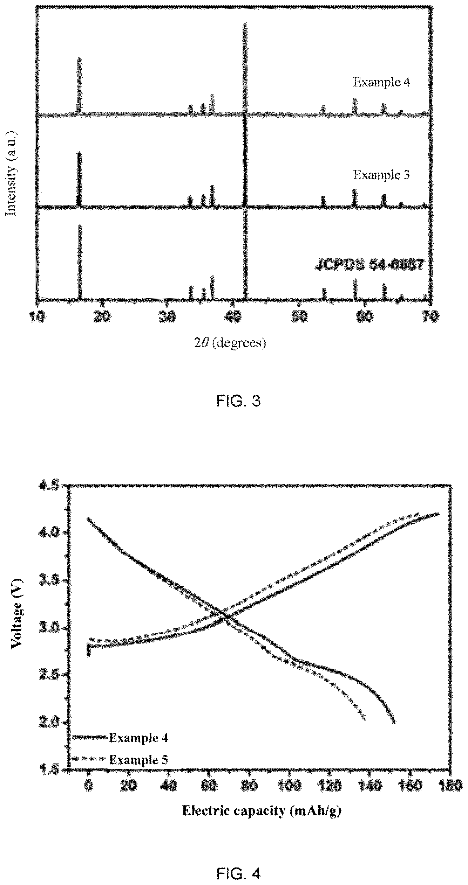

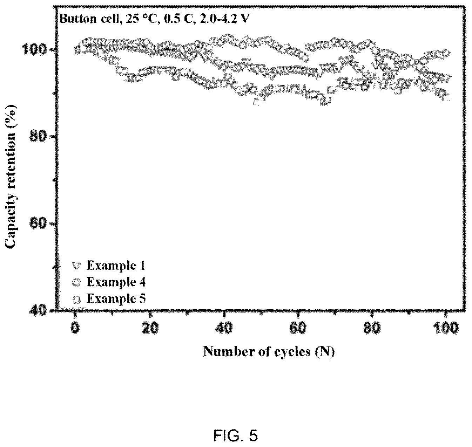

Referring to FIG. 3, it can be seen that the positive electrode materials obtained in the examples possess the space group R3-m when compared with JCPDS 54-0887 standard. Referring to FIG. 4, it can be seen that all of the examples can impart immediate charging and discharging effects to the battery. Referring to FIG. 5, it can be seen that the examples impart high capacity retention to the battery after 100 charge-discharge cycles.

Referring to Table 1, Examples 1 to 3 had substantially identical preparation processes and the same atom ratios of Mn element to Ni element in the positive electrode material, indicating that the proper atom ratios of Li element, Cu element, and Ti element in the positive electrode material were obtained. Examples 3 and 5 had substantially identical preparation processes and the same atom ratios of Li element, Cu element, and Ti element in the positive electrode material, indicating that a positive electrode material containing Fe element may lead to reduced battery performance.

Also referring to Table 1, Comparative Examples 1 to 3 had substantially identical preparation processes to that of Example 1, and the same atomic ratios of Mn element to Ni element in the positive electrode material, suggesting that the co-doping of Li element, Cu element, and Ti element produced better performance than any one of Li element, Cu element, and Ti element, and Li element, Cu element, and Ti element have synergistic effects on the performance of batteries.

Also referring to Table 1, Comparative Examples 4 to 6 had substantially identical preparation processes to that of Example 1, and the same atomic ratios of Mn element to Ni element in the positive electrode material, suggesting that the co-doping of Li element, Cu element, and Ti element produced better performance than any two of Li element, Cu element, and Ti element, and Li element, Cu element, and Ti element have synergistic effects on the performance of batteries.

**Table 1. Electrochemical test results**

| | Chemical formula | Discharge capacity in first cycle at 2.0 to 4.2 V (mAh/g) | Capacity retention (%) after 100 cycles at 2.0 to 4.2 V |
|---|---|---|---|
| Example 1 | NaMn_{0.5}Ni_{0.25}Li_{0.05}Cu_{0.1}Ti_{0.1}O₂ | 142.54 | 92.14 |
| Example 2 | NaMn_{0.5}Ni_{0.25}Li_{0.05}Cu_{0.15}Ti_{0.05}O₂ | 140.35 | 94.26 |
| Example 3 | NaMn_{0.5}Ni_{0.25}Li_{0.075}Cu_{0.075}O₂ | 148.25 | 97.17 |
| Example 4 | NaMn_{0.5}Ni_{0.25}Li_{0.075}Cu_{0.1}Ti_{0.075}O₂ | 151.15 | 96.02 |
| Example 5 | NaMn_{0.4}Ni_{0.2}Fe_{0.15}Li_{0.075}Cu_{0.1}Ti_{0.07 5}O₂ | 138.75 | 88.51 |
| Comparative Example 1 | NaMn_{0.5}Ni_{0.25}Li_{0.25}O₂ | 139.14 | 77.24 |
| Comparative Example 2 | NaMn_{0.5}Ni_{0.25}Cu_{0.25}O₂ | 133.26 | 79.55 |
| Comparative Example 3 | NaMn_{0.5}Ni_{0.25}Ti_{0.25}O₂ | 131.25 | 81.29 |
| Comparative Example 4 | NaMn_{0.5}Ni_{0.25}Li_{0.125}Cu_{0.125}O₂ | 141.12 | 84.12 |
| Comparative Example 5 | NaMn_{0.5}Ni_{0.25}Li_{0.125}Ti_{0.125}O₂ | 139.14 | 86.21 |
| Comparative Example 6 | NaMn_{0.5}Ni_{0.25}Cu_{0.125}Ti_{0.125}O₂ | 132.45 | 88.97 |

The above matters related to the common general knowledge are not described in detail and will be appreciated by those skilled in the art.

The above description is only intended to illustrate some examples of the present invention, rather than limit the present invention. Any modification, equivalent substitution, improvement and the like made without departing from the spirit and principle of the present invention shall fall within the protection scope of the present invention. The technical scope of the present invention is not limited to the content of the specification, and must be determined according to the scope of the claims.

## Claims

1. A multi-element co-doped sodium-ion positive electrode material, wherein
the positive electrode material features the O3 phase, the R-3m space group, and a chemical formula of Na_{α}MₐLi_{b}Cu_{c}Ti_{d}O_{2+β}; M is at least one of Ni, Co, Mn, Cr, V, Al, Fe, B, Si, Mg, and Zn; 0.5 ≤ α ≤ 1, -0.1 ≤ β ≤ 0.1, 0 < a < 0.95, 0 < b < 0.25, 0 < c < 0.3, 0 < d < 0.6, and a + b + c + d = 1; the positive electrode material is electroneutral.

2. The positive electrode material according to claim 1, wherein M is one, two, or three of Ni, Mn, and Fe.

3. The positive electrode material according to claim 1, wherein 0.05 ≤ a + b + c < 1.

4. A method for preparing the positive electrode material according to claim 1, comprising:
weighing proper amounts of a compound containing Na element, a compound containing M element, a compound containing Li element, a compound containing Cu element, and a compound containing Ti element according to the atom ratio of elements Na, M, Li, Cu, and Ti in the chemical formula Na_{α}MₐLi_{b}Cu_{c}Ti_{d}O_{2+β}, and mixing to give a mixture; and
calcining the mixture to give the multi-element co-doped sodium-ion positive electrode material.

5. The method according to claim 4, wherein
the compound containing M element, the compound containing Li element, the compound containing Cu element, and the compound containing Ti element are each independently at least one of a metal oxide, a metal nitrate, a metal sulfate, a metal carbonate, and a metal chloride; and/or
the compound containing Na element is at least one of sodium carbonate, sodium hydroxide, and sodium bicarbonate.

6. The method according to claim 4 or 5,
the weighing amount of the compound containing Na element is 100% to 110% of a theoretical amount calculated according to the atom ratio of Na element, M element, Li element, Cu element, and Ti element; and/or
the weighing amount of the compound containing Li element is 100% to 110% of a theoretical amount.

7. The method according to claim 4, wherein
the mixing comprises: mixing the compound containing Na element, the compound containing M element, the compound containing Li element, the compound containing Cu element, and the compound containing Ti element, and grinding in a ball mill to give the mixture, wherein the speed of the ball mill is 100 to 1000 rpm, and the time is 1 to 48 hours.

8. The method according to claim 4, wherein for the calcination, the temperature is 700 to 1050 °C, the time is 6 to 36 hours, and the ramping rate is 1 to 20 °C/min.

9. A method for preparing the positive electrode material according to claim 1, comprising:
weighing a proper amount of a nitrate containing M element or a sulfate containing M element according to the atom ratio of M element in chemical formula MCO₃ or M(OH)₂, dissolving in water, uniformly precipitating by adjusting pH with a precipitant and a complexing agent, and drying to give a precursor MCO₃ or M(OH)₂;
weighing proper amounts of a compound containing Na element, a compound containing Li element, a compound containing Cu element, a compound containing Ti element, and the precursor MCO₃ or M(OH)₂ according to the atom ratio of elements Na, M, Li, Cu, and Ti in the chemical formula Na_{α}MₐLi_{b}Cu_{c}Ti_{d}O_{2+β}, and mixing to give a mixture; and
calcining the mixture to give the multi-element co-doped sodium-ion positive electrode material.

10. The method according to claim 9, wherein
the compound containing Li element, the compound containing Cu element, and the compound containing Ti element are each independently at least one of a metal oxide, a metal nitrate, a metal sulfate, a metal carbonate, and a metal chloride; and/or
the compound containing Na element is at least one of sodium carbonate, sodium hydroxide, and sodium bicarbonate.

11. The method according to claim 9 or 10,
the weighing amount of the compound containing Na element is 100% to 110% of a theoretical amount calculated according to the atom ratio of Na element, M element, Li element, Cu element, and Ti element; and/or
the weighing amount of the compound containing Li element is 100% to 110% of a theoretical amount.

12. The method according to claim 9, wherein the pH in the step acquiring the precursor is 7.5 to 13, the precipitant is sodium hydroxide or sodium carbonate, the complexing agent is ammonia water, the drying temperature is 80 to 150 °C, and/or the drying time is 6 to 48 hours.

13. The method according to claim 9, wherein
the mixing comprises: mixing the compound containing Na element, the compound containing M element, the compound containing Li element, the compound containing Cu element, and the compound containing Ti element, and grinding in a ball mill to give the mixture, wherein the speed of the ball mill is 100 to 1000 rpm, and the time is 1 to 48 hours.

14. The method according to claim 9, wherein for the calcination, the temperature is 700 to 1050 °C, the time is 6 to 36 hours, and the ramping rate is 1 to 20 °C/min.

15. A sodium-ion battery comprising the positive electrode material according to claim 1.
